# EUROPEAN PATENT SPECIFICATION

(11) **EP 0 715 923 B1**
(45) Date of publication and mention of the grant of the patent: **15.11.2000**
(21) Application number: 95203416.3
(22) Date of filing: 08.12.1995
(51) Int. Cl.: B23K 11/00, B21F 27/10

(54) **Welding apparatus for wire-mesh mats, and wire-mesh mat**
Vorrichtung zum Schweissen von Gittermatten, und hergestellte Gittermatte dafür
Appareil de soudage pour treillis, ainsi que le treillis fabriqué

(30) Priority: 08.12.1994 NL 9402076
(43) Date of publication of application: 12.06.1996
(73) Proprietor: Van Merksteijn B.V., 7602 KJ Almelo (NL)
(72) Inventor: van Merksteijn, Jacobus L., NL-7491 GN Delden (NL); van Merksteijn, Peter L., NL-7491 CG Delden (NL)
(74) Representative: Schumann, Bernard Herman Johan

(56) References cited:
- EP-A- 0 125 716
- NL-A- 6 906 263

## Description

The invention relates to an apparatus for welding wire-mesh mats, comprising a number of adjacently positioned welding members; longitudinal supply elements for supplying longitudinal wire, a transverse supply element for supplying transverse wire substantially transversely of the longitudinal wire, and cutting means for severing wire-mesh mats.

The invention further relates to a method of manufacturing a wire-mesh mat. Such wire-mesh mats are employed as reinforcement in concrete work.

An above mentioned welding apparatus as described in NL-A-6906263 is in general use. The maximum quantity of wire-mesh mats to be produced is largely determined by the capacity of the machine, standstill periods for connecting a new supply of steel wires and standstill periods for repairing breakdowns in the supply of steel wires.

EP-A-0 707 907, which is state of the art according to Art. 54(3) EPC for the designated contracting states AT, DE, FR, GB, IT and NL, describes an apparatus for welding wire-mesh mats, comprising a number of adjacently positioned welding members; longitudinal supply elements for supplying longitudinal wire, a transverse supply element for supplying transverse wire substantially transversely of the longitudinal wire, and cutting means for severing wire-mesh mats wherein the number of longitudinal supply elements is greater than the number of welding members and wherein one welding member can be served by at least two longitudinal supply elements.

Such wire-mesh mats are employed as reinforcement in concrete work.

The object of the present invention is to increase the quantity of wire-mesh mats to be produced within a determined period of time by limiting the standstill periods. The present invention has for its further object to manufacture wire-mesh mats with minimal material loss.

The invention provides to this end a welding apparatus according to claim 1. Due to the greater number of longitudinal supply elements than welding members, in the case there is a malfunction in a longitudinal supply element or a supply element becomes empty, an additional longitudinal supply element is present which can take over the function of the inoperative longitudinal supply element. For this reason it is unnecessary to shut down the whole welding apparatus when one or several longitudinal supply elements cease to operate. This increases the quantity of wire-mesh mats to be produced with a welding apparatus without an excessive investment being required for this purpose.

The preferred embodiment of the welding apparatus is characterized in that each longitudinal supply element comprises cutting means for severing an associated longitudinal steel wire. With this step it is possible when a steel wire becomes jammed in a longitudinal supply element to cut through the longitudinal steel wire and, using another longitudinal supply element, to feed in another steel wire. This is possible without the welding apparatus having to stop operating.

Another preferred embodiment is characterized in that each welding member co-acts with at least two associated longitudinal supply elements. Such a welding apparatus is structurally simple to manufacture since only the number of longitudinal supply elements has to be increased and these must be provided with stationary switches. This will be further elucidated in the figure description. It is conceivable herein that the at least two supply elements co-acting with a welding member comprise a multi-cutting shear.

Yet another preferred embodiment is characterized in that the apparatus comprises a central control unit and sensors connected to the central control unit and co-acting with supply elements for actuating the supply elements. Using the central control unit and the sensors it is possible to realize a fully automatically operating welding apparatus whereby the function of a longitudinal supply element is automatically taken over by another longitudinal supply element in the case of depletion or breakdown.

The invention further provides a method according to claim 6.

The present invention will be further elucidated with reference to the non-limitative embodiments shown in the figures hereinbelow. Herein:
fig. 1 shows in schematic view a welding apparatus according to the invention, and
fig. 2 shows in schematic top view a wire-mesh mat according to the invention.

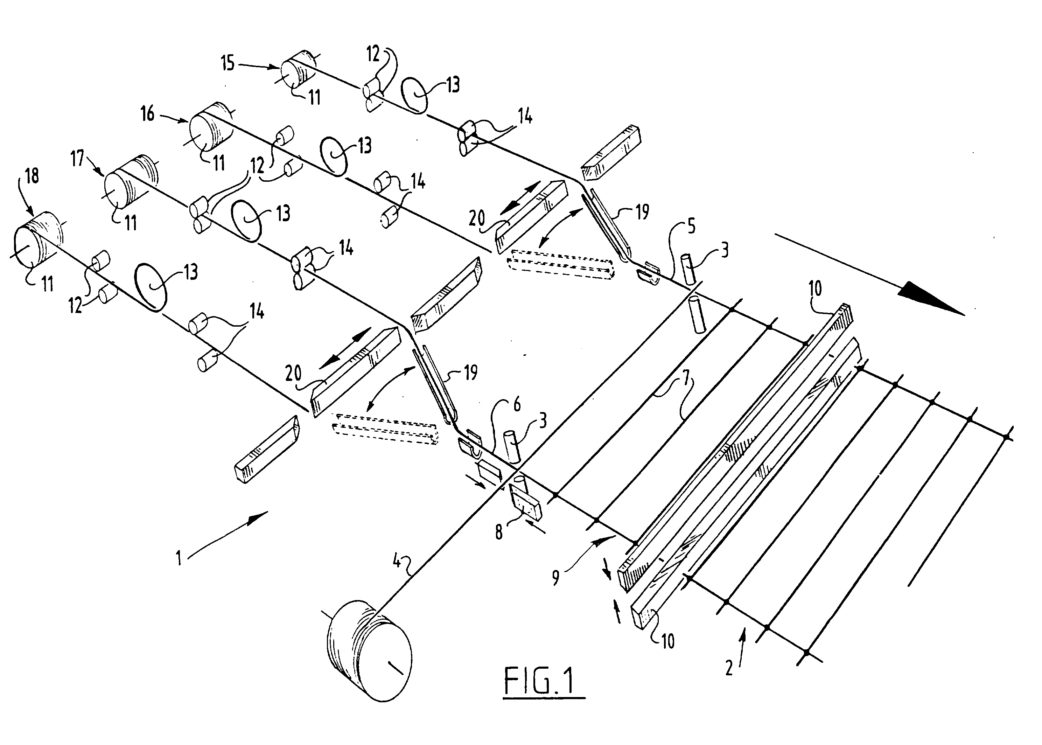

A welding apparatus 1 shown in fig. 1 for manufacturing wire-mesh mats 2 is a simplified view of the real situation since wire-mesh mats 2 are generally manufactured with fifteen longitudinal wires while the wire-mesh mats 2 in this figure have only two longitudinal wires. Using welding members 3, for instance welding electrodes, transverse wire 4 is welded to longitudinal wire, here wires 5, 6. The transverse wire 4 is cut into separate transverse steel wires 7 by transverse wire cutting means 8. The thus created welded product 9 is cut into wire-mesh mats 2 by wire-mesh mat cutting means 10. The longitudinal wire for the longitudinal steel wires 5, 6 is wound onto rollers 11. By means of first roller drives 12 the longitudinal wire is pulled from the rollers 11. Arranged in the longitudinal wire are loops 13 which function as buffer between the supply of longitudinal wire by the first roller drives 12 and the take-off of longitudinal wire by second roller drives 14. The distance between the rollers of the first and second roller drives 12, 14 respectively is adjustable so that as required they can or cannot engage on the longitudinal wire. All this is already known.

A single longitudinal supply element 15-18 is formed by the unit of roller 11, a first roller drive 12, a loop 13 and a second roller drive 14. For the longitudinal steel wire 5, 6 required for manufacture of wire-mesh mats 2, two longitudinal supply elements 15-18 are disposed in the embodiment shown here. During manufacture of wire-mesh mats 2 only one of the two longitudinal supply elements 15, 16 and one of the longitudinal supply elements 17, 18 will usually be in operation. The position of the longitudinal steel wires 5, 6 is determined by means of stationary switches 19, irrespective of which longitudinal supply elements are in operation. Each longitudinal supply element 15-18 is also provided with longitudinal supply cutting means 20, embodied here as double shear. For the feed of longitudinal steel wire 5 this means that one of the longitudinal supply elements 15, 16 feeds the wire and that when roller 11 becomes empty the other longitudinal supply element takes over the supply function. Also in the case of malfunction of the longitudinal supply element 15, 16 providing the supply of the wire, the other longitudinal supply element 15, 16 will have to take over the supply function. It is possible to operate the shown apparatus manually but it is also possible using sensors arranged for instance in the second roller drives 14 to provide a central control unit (not shown) with information to enable actuation of the longitudinal supply elements 15-18. The longitudinal supply cutting means 20 can be used to sever wire when a longitudinal supply element 15-18 for instance becomes jammed. In such a situation the longitudinal wire must be severed before the buffer in the form of the loop 13 is empty and another longitudinal supply element 15-18 must also be activated.

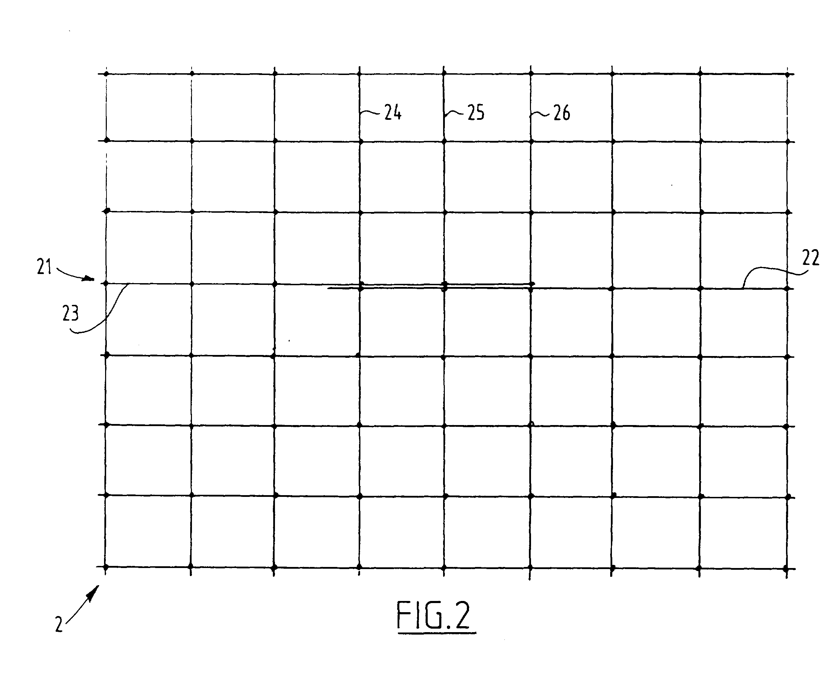

Finally, fig. 2 shows the wire-mesh mat 2 in schematic top view. A longitudinal steel wire 21 which is arranged in wire-mesh mat 2 consists of two parts 22, 23. The longitudinal steel wire parts 22, 23 are both welded fixedly to three of the transverse steel wires 24-26. It is thus possible to change longitudinal supply element 15-18 without this resulting in a weakening of the wire-mesh mat 2 due to the overlap of the longitudinal steel wire parts 22, 23. It is of course also possible to actuate the switch of longitudinal supply element such that two parts of longitudinal steel wires connect precisely at the location where successive wire-mesh mats 2 are cut off. In this latter case (such an embodiment is not covered by the claims for AT, DE, FR, GB, IT, NL) an overlap is not required. It will be apparent that an additional supply element can be used in the same manner for transverse wire.

## Claims (Claims for the following Contracting State(s): BE, CH, LI, DK, ES, LU, PT, SE)

1. Apparatus (1) for welding wire-mesh mats (2), comprising:
- a number of adjacently positioned welding members (3);
- longitudinal supply elements for supplying longitudinal wire (5, 6),
- a transverse supply element for supplying transverse wire (4) substantially transversely of the longitudinal wire (5, 6); and
- cutting means (10) for severing wire-mesh mats (2),
**characterized in that**
the number of longitudinal supply elements (15-18) is greater than the number of welding members (3) and one welding member (3) can be served by at least two longitudinal supply elements (15-18).

2. Welding apparatus (1) as claimed in claim 1,
**characterized in that**
each longitudinal supply element (15-18) comprises cutting means (20) for severing an associated longitudinal steel wire (5, 6).

3. Welding apparatus (1) as claimed in claim 1 or 2,
**characterized in that**
each welding member (3) co-acts with at least two associated longitudinal supply elements (15-18).

4. Welding apparatus (1) as claimed in claim 3,
**characterized in that**
the at least two supply elements (15-18) co-acting with one welding member (3) comprise a multi-cutting shear (20).

5. Welding apparatus (1) as claimed in any of the foregoing claims,
**characterized in that**
the apparatus comprises a central control unit and sensors connected to the central control unit and co-acting with supply elements (15-18) for actuating the supply elements (15-18) .

6. Method of manufacturing a wire-mesh mat (2), wherein a longitudinal steel wire (24, 25, 26) consists of two coneecting parts (22, 23), which are both fixedly welded to at least one common transverse steel wire (4), the method comprising using an apparatus (1) as claimed in any of the foregoing claims.

## Claims (Claims for the following Contracting State(s): AT, DE, FR, GB, IT, NL)

1. Apparatus (1) for welding wire-mesh mats (2), comprising:
- a number of adjacently positioned welding members (3) ;
- longitudinal supply elements (15-18) for supplying longitudinal wire (5, 6);
- a transverse supply element for supplying transverse wire (4) substantially transversely of the longitudinal wire (5, 6); and
- cutting means (10) for severing wire-mesh mats (2),
wherein the number of longitudinal supply elements (15-18) is greater than the number of welding members (3) and wherein one welding member (3) can be served by at least two longitudinal supply elements (15-18), and
a control unit which is adapted to actuate the supply elements such that two longitudinal wires are welded overlappingly to a transverse wire.

2. Welding apparatus (1) as claimed in claim 1,
wherein
each longitudinal supply element (15-18) comprises cutting means (20) for severing an associated longitudinal steel wire (5, 6).

3. Welding apparatus (1) as claimed in claim 1 or 2,
wherein
each welding member (3) co-acts with at least two associated longitudinal supply elements (15-18).

4. Welding apparatus (1) as claimed in claim 3,
wherein
the at least two supply elements (15-18) co-acting with one welding member (3) comprise a multi-cutting shear (20).

5. Welding apparatus (1) as claimed in any of the foregoing claims,
wherein
the apparatus comprises a central control unit and sensors connected to the central control unit and co-acting with supply elements (15-18) for actuating the supply elements (15-18).

6. Method of manufacturing a wire-mesh mat (2), wherein a longitudinal steel wire (24, 25, 26) consitsts of two connecting parts (22, 23), which are both fixedly welded to at least one common transverse steel wire (4), the method comprising using an apparatus (1) as claimed in any of the foregoing claims.

## Patentansprüche (Patentansprüche für folgende(n) Vertragsstaat(en): BE, CH, LI, DK, ES, LU, PT, SE)

1. Gerät (1) zum Schweissen von Baustahlmatten (2), welches umfasst:
eine Anzahl von benachbart angeordneten Schweissgeräten (3);
Längszuführungselemente zum Zuführen von Längsdraht (5, 6);
ein Querzuführungselement zum Zuführen von Querdraht (4) im wesentlichen quer zum Längsdraht (5, 6); und
eine Schneideinrichtung (10) zum Trennen der Baustahlmatten (2),
dadurch gekennzeichnet, dass die Anzahl von Längszuführungselementen (15 - 18) grösser ist als die Anzahl von Schweissgeräten (3) und ein Schweissgerät (3) durch zumindest zwei Längszuführungselemente (15 - 18) versorgt werden kann.

2. Schweissgerät (1) nach Anspruch 1, dadurch gekennzeichnet dass jedes Längszuführungselement (15 - 18) eine Schneideinrichtung (20) umfasst, um einen zugeordneten Längsstahldraht (5, 6) zu durchtrennen.

3. Schweissgerät (1) nach Anspruch 1 oder 2, dadurch gekennzeichnet dass jedes Schweissgerät (3) mit zumindest zwei zugeordneten Längszuführungselementen (15 - 18) zusammenarbeitet.

4. Schweissgerät (1) nach Anspruch 3, dadurch gekennzeichnet dass die zumindest beiden Zuführungselemente (15 - 18), die mit einem Schweissgerät (3) zusammenarbeiten, eine Multischneideschere (20) umfassen.

5. Schweissgerät (1) nach einem der vorhergehenden Ansprüche, dadurch gekennzeichnet dass das Gerät eine Zentralsteuereinheit und Sensoren, die mit der Zentralsteuereinheit verbunden sind und mit Zuführungselementen (15 - 18 ) zusammenwirken, umfasst, um die Zuführungselemente (15 - 18) zu betätigen.

6. Verfahren zum Herstellen einer Baustahlmatte (2), wobei ein Längsstahldraht (24, 25, 26) aus zwei Verbindungsteilen (22, 23) besteht, die beide an zumindest einen gemeinsamen Querstahldraht (4) angeschweisst werden, wobei das Verfahren ein Gerät (1) verwendet, wie es in einem der vorhergehenden Ansprüche beansprucht wurde.

## Patentansprüche (Patentansprüche für folgende(n) Vertragsstaat(en): AT, DE, FR, GB, IT, NL)

1. Gerät (1) zum Schweißen von Baustahlmatten (2), welches umfaßt:
eine Anzahl von benachbart angeordneten Schweißgeräten (3);
Längszuführungselemente (15 - 18) zum Zuführen von Längsdraht (5, 6);
ein Querzuführungselement zum Zuführen von Querdraht (4) im wesentlichen quer zum Längsdraht (5, 6); und
eine Schneideinrichtung (10) zum Trennen der Baustahlmatten (2),
wobei die Anzahl von Längszuführungselementen (15 - 18) größer ist als die Anzahl von Schweißgeräten (3) und wobei ein Schweißgerät (3) durch zumindest zwei Längszuführungselemente (15 - 18) versorgt werden kann, und
eine Steuereinheit, die ausgebildet ist, die Zuführungselemente zu betätigen, so daß zwei Längsdrähte überlappend an einen Querdraht geschweißt werden.

2. Schweißgerät (1) nach Anspruch 1, wobei jedes Längszuführungselement (15 - 18) eine Schneideinrichtung (20) umfaßt, um einen zugeordneten Längsstahldraht (5, 6) zu durchtrennen.

3. Schweißgerät (1) nach Anspruch 1 oder 2, wobei jedes Schweißgerät (3) mit zumindest zwei zugeordneten Längszuführungselementen (15 - 18) zusammenarbeitet.

4. Schweißgerät (1) nach Anspruch 3, wobei die zumindest beiden Zuführungselemente (15 - 18), die mit einem Schweißgerät (3) zusammenarbeiten, eine Multischneideschere (20) umfassen.

5. Schweißgerät (1) nach einem der vorhergehenden Ansprüche, wobei das Gerät eine Zentralsteuereinheit und Sensoren, die mit der Zentralsteuereinheit verbunden sind und mit Zuführungselementen (15 - 18) zusammenwirken, umfaßt, um die Zuführungselemente (15 - 18) zu betätigen.

6. Verfahren zum Herstellen einer Baustahlmatte (2), wobei ein Längsstahldraht (24, 25, 26) aus zwei Verbindungsteilen (22, 23) besteht, die beide an zumindest einen gemeinsamen Querstahldraht (4) angeschweißt werden, wobei das Verfahren ein Gerät (1) verwendet, wie es in einem der vorhergehenden Ansprüche beansprucht wurde.

## Revendications (Revendications pour l'(les) Etat(s) contractant(s) suivant(s): BE, CH, LI, DK, ES, LU, PT, SE)

1. Dispositif (1) pour souder des treillis métalliques (2), comprenant:
- plusieurs éléments de soudage (3) placés les uns à côté des autres;
- des éléments d'alimentation longitudinale pour délivrer du fil métallique longitudinal (5, 6);
- un élément d'alimentation transversale pour amener du fil métallique transversal (4) sensiblement à la transversale du fil métallique longitudinal (5, 6); et
- des moyens de coupe (10) pour couper les treillis métalliques (2);
caractérisé en ce que le nombre d'éléments d'alimentation longitudinale (15 à 18) est supérieur au nombre d'éléments de soudage (3) et un élément de soudage (3) peut être servi par au moins deux éléments d'alimentation longitudinale (15 à 18).

2. Dispositif de soudage (1) selon la revendication 1,
caractérisé en ce que chaque élément d'alimentation longitudinale (15 à 18) comprend des moyens de coupe (20) pour couper un fil d'acier longitudinal associé (5, 6).

3. Dispositif de soudage (1) selon la revendication 1 ou 2,
caractérisé en ce que chaque élément de soudage (3) coopère avec au moins deux éléments d'alimentation longitudinale associés (15 à 18).

4. Dispositif de soudage (1) selon la revendication 3,
caractérisé en ce que les au moins deux éléments d'alimentation (15 à 18) coopérant avec un élément de soudage (3) comprennent une cisaille multi-coupe (20).

5. Dispositif de soudage (1) selon l'une quelconque des revendications précédentes,
caractérisé en ce que le dispositif comprend une unité de commande centrale et des capteurs reliés à l'unité de commande centrale et coopérant avec les éléments d'alimentation (15 à 18) pour actionner les éléments d'alimentation (15 à 18).

6. Procédé de fabrication d'un treillis métallique (2), dans lequel un fil d'acier longitudinal (24, 25, 26) se compose de deux éléments à raccorder (22, 23) que sont tous deux soudés de manière fixe à au moins un fil d'acier transversal commun (4), le procédé comprenant l'utilisation d'un dispositif (1) selon l'une quelconque des revendications précédentes.

## Revendications (Revendications pour l'(les) Etat(s) contractant(s) suivant(s): AT, DE, FR, GB, IT, NL)

1. Dispositif (1) pour souder des treillis métalliques (2), comprenant:
- plusieurs éléments de soudage (3) placés les uns à côté des autres;
- des éléments d'alimentation longitudinale (15 à 18) pour délivrer du fil métallique longitudinal (5, 6);
- un élément d'alimentation transversale pour amener du fil métallique transversal (4) sensiblement à la transversale du fil métallique longitudinal (5, 6); et
- des moyens de coupe (10) pour couper les treillis métalliques (2);
dans lequel le nombre d'éléments d'alimentation longitudinale (15 à 18) est supérieur au nombre d'éléments de soudage (3) et dans lequel un élément de soudage (3) peut être servi par au moins deux éléments d'alimentation longitudinale (15 à 18); et
une unité de commande qui est adaptée pour actionner les éléments d'alimentation de telle sorte que deux fils métalliques longitudinaux soient soudés en chevauchement à un fil métallique transversal.

2. Dispositif de soudage (1) selon la revendication 1,
dans lequel chaque élément d'alimentation longitudinale (15 à 18) comprend des moyens de coupe (20) pour couper un fil d'acier longitudinal associé (5, 6).

3. Dispositif de soudage (1) selon la revendication 1 ou 2,
dans lequel chaque élément de soudage (3) coopère avec au moins deux éléments d'alimentation longitudinale associés (15 à 18).

4. Dispositif de soudage (1) selon la revendication 3,
dans lequel les au moins deux éléments d'alimentation (15 à 18) coopérant avec un élément de soudage (3) comprennent une cisaille multi-coupe (20).

5. Dispositif de soudage (1) selon l'une quelconque des revendications précédentes,
dans lequel le dispositif comprend une unité de commande centrale et des capteurs reliés à l'unité de commande centrale et coopérant avec les éléments d'alimentation (15 à 18) pour actionner les éléments d'alimentation (15 à 18).

6. Procédé de fabrication d'un treillis métallique (2), dans lequel un fil d'acier longitudinal (24, 25, 26) se compose de deux éléments à raccorder (22, 23) que sont tous deux soudés de manière fixe à au moins un fil d'acier transversal commun (4), le procédé comprenant l'utilisation d'un dispositif (1) selon l'une quelconque des revendications précédentes.
